Europäisches Patentamt

European Patent Office

Office européen des brevets

(11) Publication number: 0 384 651
A1

# EUROPEAN PATENT APPLICATION

(21) Application number: 90301648.3

(22) Date of filing: 15.02.90

(51) Int. Cl.5: B29C 43/02, B29C 59/02, B29C 67/14

(30) Priority: 20.02.89 GB 8903778

(43) Date of publication of application:
29.08.90 Bulletin 90/35

(84) Designated Contracting States:
AT BE CH DK ES FR GB LI NL SE

(71) Applicant: The Wiggins Teape Group Limited
P.O. Box 88 Gateway House Basing View
Basingstoke Hampshire RG21 2EE(GB)

(72) Inventor: Egan, Paul
9 Ullswater Gardens
Aylesham, Kent(GB)
Inventor: Biggs, Ian Stedman
11 Orchard Close, Hughenden Valley
High Wycombe, Buckinghamshire(GB)
Inventor: Wallace, Peter Liam
13 Oakwood, Flackwell Heath
High Wycombe, Buckinghamshire(GB)

(74) Representative: Bridge-Butler, Alan James et al
G.F. REDFERN & CO. High Holborn House
52/54 High Holborn
London WC1V 6RL(GB)

(54) Process for moulding articles of fibre reinforced plastics material.

(57) A process for moulding articles from a charge of sheet-like material comprising plastics material and reinforcing fibres about 50 millimetres or less in length, heating the sheet-like material to a moulding temperature and subjecting it to a chill moulding process in a press mould and which includes providing a thermal barrier material of lower thermal conductivity than the mould between the surface of the sheet-like material and at least part of the mould to prevent chill marking of the moulded surface, said thermal barrier material being separable from the moulded surface subsequent to moulding.

FIG.1

# PROCESS FOR MOULDING ARTICLES OF FIBRE REINFORCED PLASTICS MATERIAL

This invention relates to a process for moulding articles of fibre reinforced plastics material.

European Patent Application No. 85300031.2 (Publication No. 0 148 760) sets forth a process for making a permeable sheet like material comprised of unconsolidated particulate plastics (especially thermoplastics) material and relatively short reinforcing fibres, typically 50 millimetres or less in length. After intermediate processing to cause the plastics component to be brought to a molten condition and fully wet the reinforcing fibres, the material is suitable for chill moulding into fibre reinforced plastics articles. Various intermediate processing routes can be used.

According to the above mentioned European Patent Application in the sheet of thermoplastics material can be reinforced with glass fibres prepared by the process set forth in British Patent Specifications Nos. 1 129 759 or 1 329 409, that is, by producing in a foam producing apparatus an aqueous foamed dispersion comprising a gas dispersed in the form of very small bubbles in an aqueous medium containing a surface active agent. Particulate plastics material and single glass fibres which are between 7 and 50 mm long are dispersed in the foamed dispersion in the proportions of 20% to 70% by weight of fibres and the dispersion is deposited on a foraminous support, for example the Fourdrinier wire of a papermaking machine, to form a fibrous material matrix web, which is then consolidated.

The fibres can be single discrete fibres having a high modulus of elasticity as defined in European Patent Application No. 85300033.9 (Publication No. 0 148 762).

The term high modulus of elasticity is to be taken as meaning a modulus of elasticity substantially higher than that of a consolidated sheet which could be formed from the structure. The fibres falling into this category include glass, carbon and ceramic fibres and fibres such as the aramid fibres sold under the trade names Kevlar and Nomex and will generally include any fibre having a modulus higher than 10,000 Mega Pascals.

Thus, for example, and as described in the aforementioned European Patent Application No. 85300031.2 (Publication No. 0 148 760), the permeable material may be subjected to heat and pressure and then cooled to form a consolidated sheet. Before use in a moulding process, the sheet is reheated so that the plastics component softens and permits the stresses in the fibre reinforcement to relax and re-expand the sheet which can then be chill moulded.

Alternatively, the sheet-like material may be heated and passed through cool nip rolls as set out in European Patent Application No. 87306602.1 (Publication No. 0 255 316). The resulting permeable expanded sheet can then be subjected to through air heating in accordance with the process of European Patent Application No. 85300033.9 (Publication No. 0 148 762) prior to chill moulding.

The use of short single fibres in the starting material has considerable advantages in that they flow readily with the molten thermoplastic in which they are entrained when subjected to pressure in the mould. This results in a very even distribution of the fibres through the moulding to give consistent reinforcement throughout the moulded structure, even in the most intricate mouldings.

In the chill moulding process, a charge material pre-heated to above the melt temperature of the plastics component is charged into a mould in which the mould parts are controlled at a temperature lower than that at which the plastics component will solidify. Moulding pressure is then applied to the hot charge sufficiently fast to cause both the plastics and fibre components of the charge to flow into the configuration of the mould before solidification of the plastics component occurs.

Chill moulding is a well known technique for moulding unreinforced plastics materials. It has however been found that its use for moulding plastics materials reinforced with short fibres can result in surface marring of the final moulding.

The production process for the starting material as set forth in European Patent Application No. 85300031.3 (Publication No. 0 148 760) causes the component fibres to be oriented generally in the plane of the sheet. It has however been found that where surface marring occurs, it is caused by the projection of fibres through the surface of the sheet, and where lateral plastic flow occurs, it also causes their re-orientation. The phenomenon of surface marring is hereinafter referred to as "chill marking".

Trials have shown that chill marks can be reduced or eliminated by a reduction in the differential between the temperature of the chill mould and that of the charge of pre-heated reinforced plastics material, that is by increasing the mould temperature. However, this has in turn been found to produce an unacceptable warping in the resultant moulding, require an unacceptable increase in energy usage, and also result in long moulding cycle times, giving rise to poor productivity. Alternatively, the moulding tools may be made of epoxy resin. However, because of their low thermal conductivity, the use of epoxy tools also results in long moulding cycle times and poor productivity. In addition, such tools are not always suitable for use when high moulding pressures need to be employed.

The present invention is intended to provide a process which will overcome some of the disadvantages referred to above.

According to the present invention a process for moulding articles from a charge of sheet-like material comprising plastics material and reinforcing fibres about 50 millimetres or less in length, includes heating the sheet-like material to a moulding temperature and subjecting it to a chill moulding process in a press mould and which includes providing a thermal barrier material of lower thermal conductivity than the mould between the surface of the sheet-like material and at least part of the mould to prevent chill marking of the moulded surface, said thermal barrier material being separable from the moulded surface subsequent to moulding.

Thus, we have established that by inserting a barrier of lower thermal conductivity between the tool surface and the charge, the thermal gradient is sufficiently reduced to allow flow moulding to take place before chill marking occurs. The thickness of the barrier material will be determined by its thermal conductivity, the speed of press operation, the nature of the material being moulded, and the temperature differential between the charge and the mould.

According to one aspect of the present invention said thermal barrier is provided as a coating on the mould and can be, for example, of enamel, ceramic or a polymeric material.

According to another aspect of the invention the thermal barrier may comprise an insert which is removable from the mould after each pressing operation. With this arrangement the insert is adapted to be re-used after each pressing operation.

The thermal barrier material may, if desired, have a textured surface which produces an embossing effect on the moulded surface.

If desired a thermal barrier material can be provided on two or more surfaces of the mould.

The charge of sheet-like material can be made by the process set forth in European Patent Application No. 85300031.2 (Publication No. 0 148 760), European Patent Application No. 85300033.9 (Publication No. 0 148 762), or European Patent Application No. 87306602.1 (Publication No. 0 255 316).

Preferably the thermal barrier material has a thermal conductivity of less than about 1.0 watt/Meter degree C., and can be less than about 0.5 watt/Meter degree C.

It will be appreciated that the process will depend upon various parameters, for example the thermal conductivity and thickness of the thermal barrier, the temperature of the tool, the speed of the press, the temperature of the material to be moulded and the fibre content.

The invention also includes a moulding when formed by the process as set forth above.

The use of the process results in a moulded article of improved appearance.

The invention can be performed in various ways and some embodiments will now be described by way of example and with reference to the accompanying drawings which also illustrate some of the results obtained during experimental research, and in which :

Figure 1 is a diagrammatic side elevation of a charge of plastics material reinforced with short fibres in a press;

Figure 2 is a similar view to Figure 1 with the press partially closed;

Figure 3 is a similar view to Figures 1 and 2 with the press closed further;

Figure 4 is a diagrammatic side view of a press charged with the pre-heated material and a thermal barrier provided on the lower press tool member;

Figure 5 is a view similar to Figure 4 in which the thermal barrier comprises a coating applied to the lower press tool member;

Figure 6 is a view similar to Figure 4 but of an alternative arrangement in which the thermal barrier material comprises an insert which can be discarded or retained for re-use after the pressing operation;

When a part is to be press moulded from consolidated or pre-expanded sheet-like material comprised of plastics material and short reinforcing fibres (referred to herein as FRP), the sheet-like material is pre-heated to a temperature above the melting point of the polymer matrix. In the case of a consolidated sheet, the glass fibre web is additionally freed from the constraints of the solid matrix and expands to about twice its consolidated thickness. The expanded web containing the molten polymer is transferred to a chill mould held at a temperature below the melting point of the polymer and flow moulded under pressure. For example, for moulding polypropylene the tool is held at a temperature of about 60-70 degrees C, which is well below the melting point of the polymer. The heat from the charge rapidly dissipates into the tool, solidifying the moulded part.

The surface of a part moulded in this way exhibited three distinct regions; a prime chill mark region; a secondary chill mark region and an outer region.

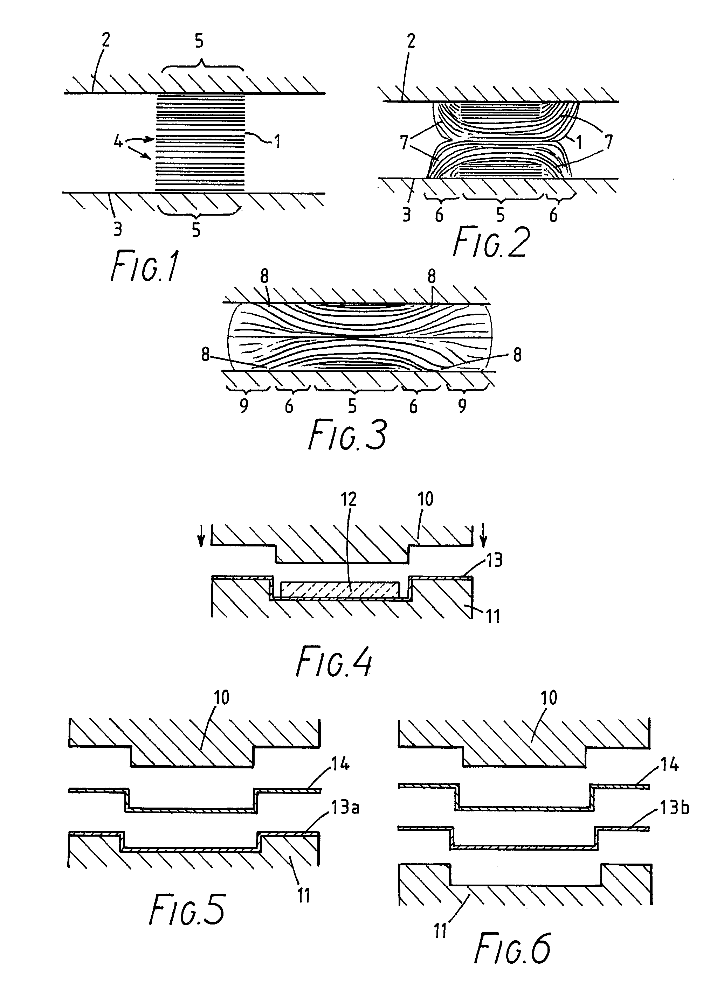

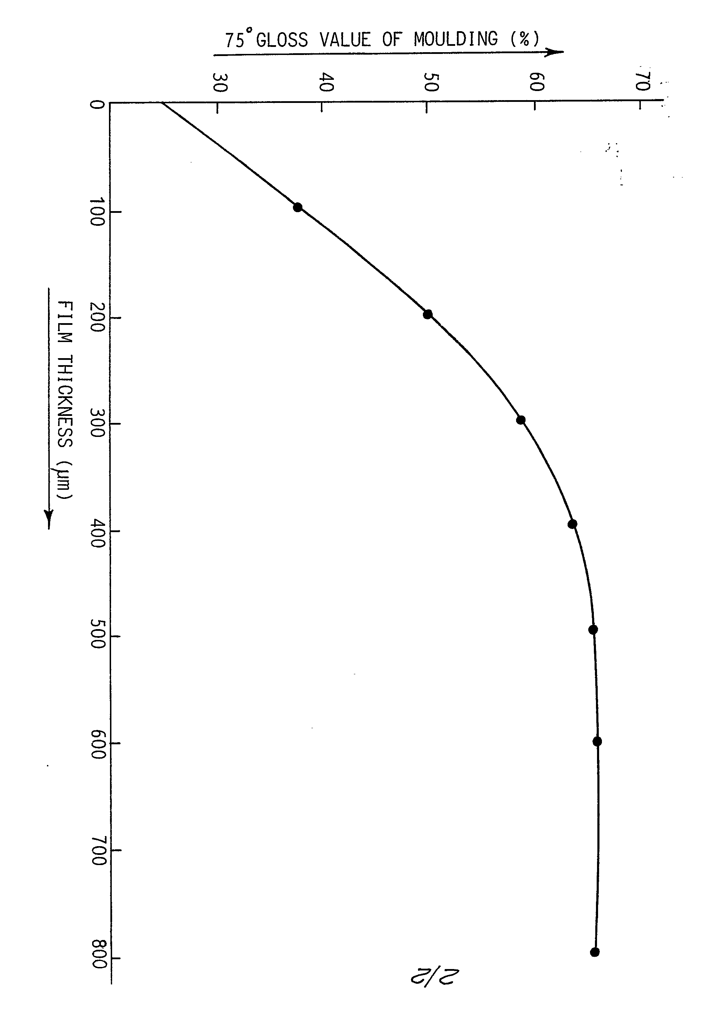

Figure 1 of the drawings shows a sheet 1 of pre-heated expanded FRP material comprising polypropylene which has been placed between an upper tool 2 and a lower tool 3 of a chill moulding press which are held at a temperature of 60° C. When the press is first closed the surface of the hot expanded charge 1 cools rapidly before any flow takes place to leave a primary chill mark on the final moulding. The general orientation of the fibre component of the charge is indicated by the lines 4 and the location of the primary chill mark on the surface is indicated at 5. As moulding pressure is then applied the molten polypropylene of the charge starts to flow from the core region with the fibres aligning in the direction of polymer flow diverging from the central plane of the moulding as indicated by reference numeral 7 in Figure 2. The material solidifies on contact with the mould surfaces surrounding the primary chill mark 5 to form secondary chill mark regions indicated by reference numeral 6.

With the application of further pressure as shown in Figure 3, the polymer flow becomes more parallel with the mould surfaces, generally indicated at 8. The fibres align themselves generally in the direction of polymer flow, creating a more open fibre structure which allows polymer to flow to the surface. This outer region is indicated at 9.

The primary chill mark region 5 is caused by rapid cooling of the hot surface of the charge when it comes into contact with the mould tool permitting minimal lateral fibre movement. This has been illustrated from photomicrographs, which show the regularity of fibre distribution both at the expanded surface of the charge prior to moulding and in the primary chill mark region 5 after moulding. By contrast photomicrographic examination of the secondary chill mark region 6 shows a disturbed pattern of fibres, some of which protrude from the moulding surface.

The material comprising the charge was made according to the process of European Patent Application No. 85300031.2 (Publication No. 0 148 760) which is known to cause the reinforcing fibres to lie parallel to the plane of the sheet. Thus for the fibres to have become inclined at an angle in the secondary chill mark region during moulding, flow must apparently have taken place first from the core of the charge as shown in Figures 1, 2 and 3.

Photomicrographic examination of the outer region 9 showed a polymer rich surface in which the fibres are all aligned in the direction of flow. The fibres in this region present a much more open structure than in the primary or secondary chill mark regions, and so allow polymer to reach the surface more easily.

The surface finish achieved in the outer zone is of satisfactory quality. However the glass rich surfaces of the primary and secondary chill mark regions constitute surface defects which are unacceptable.

It has now been found that the formation of primary and secondary chill marks can be avoided by the interposition between the charge and the chill moulding tool of a thermal barrier layer having a lower thermal conductivity than the moulding tool. The barrier layer may comprise a permanent liner for the moulding tool or an independent layer which is removed after each moulding operation and retained for re-use of discarded.

For the moulding of a fibre reinforced polypropylene charge using moulding tools at a temperature of 60° C, 500 micron thick films of polycarbonates, polyimide or polyetherether ketone were found to provide optimum results.

The thermal conductivity of the steel moulding tool was 37.5 Btu/ft. hour degree F (65.0 Watts/meter degree C) as compared with the films which were of the order of 0.1 - 0.2 Btu/ft. hour degree F (0.2 - 0.4 Watts/meter degree C). The resistance to heat transmission through the films produced a transient retardation of the solidification of the charge. This was sufficient to permit the molten polymer to flow to the surface of the charge and obviate the formation of chill marks without significant lengthening of the moulding cycle.

Figure 4 shows one method of moulding according to the invention. The upper tool of a press is indicated by reference numeral 10 and the lower tool by reference numeral 11. The tools 10 and 11 are controlled at a temperature of from 60° C to 70°C. A charge of material to be moulded is indicated by reference numeral 12 and comprises a sheet-like matrix of polypropylene having dispersed therein single discrete glass fibres, the material having been expanded from a consolidated state by pre-heating to 220 - 230° C.

The lower tool 11, which forms the outer face surface of the moulding, is provided with a thermal barrier indicated by reference numeral 13. The barrier 13 may be in the form of a' coating applied to the tool, of for example enamel, ceramic, or a polymer which will not fuse to the moulding during the moulding process.

Alternatively, the thermal barrier may comprise a removable insert, for example a polymeric film, the film again being incompatible with the material of the charge so that fusion or adhesion to the moulding does not occur.

When the press is closed to apply pressure and form the moulding, the thermal barrier 13 acts to retard the transmission of heat from the charge to the tool, so that plastic flow can occur within the charge and prevent the formation of chill marks. This could only otherwise be achieved by increasing the mould temperature, thus resulting in higher energy costs and slower mould cycle times.

After cooling, the mould 10/11 is opened, so as to permit the moulding 14, formed from the charge 12 to be removed as shown in Figures 5 and 6. Where the thermal barrier 13 is constituted by a coating, it of course remains adherent to the mould as seen at 13a in Figure 5.

Alternatively, where the thermal barrier 13 is an insert, it is removed as shown at 13b in Figure 6.

If desired the thermal barrier material, whether it be a coating or an insert, may be provided with a textured surface to provide a corresponding finish on the surface of the article formed from the charge.

In the process described above only one surface of the mould, that is the lower press tool 11, is provided with the thermal barrier but if it is desired to produce a moulding which is to have a surface free of chill marks on both sides the'n a further coating or insert of the kind set forth above can be provided as a thermal barrier between the upper tool 10 and the charge.

A measure of the severity of the primary chill mark produced in relation to the thickness of the thermal barrier film used was obtained by taking gloss measurements in the area of the moulding surface corresponding to that of the original charge in the mould; glass values becoming higher as the severity of the chill mark decreases.

Various thicknesses of barrier film of polyimide, polycarbonate or polyetheretherketone having thermal conductiveness in the region of 0.2 - 0.4 Watts/meter degree C were each inserted in the press. A charge of material comprising 30% single glass fibres 11 u in diameter and 70% polypropylene and prepared as described in European Patent Application No. 85300031.2 (Publication No. 0 148 760) and heated to 220 °C was placed on the film and the press cycle activated generally as described above with reference to Figures 4 and 6. The press temperature was 60 °C. After cooling, the press was opened, the film discarded and gloss measurements taken in the area referred to above. The gloss measurement results for the various thickness of the three types of film are set out in Table 1 below; the measurements were made with a Glossmeter supplied by Sheen Instruments Ltd. and complying with ISO 2813 and ASTM D523 Standards.

TABLE 1

| Film Thickness | % Gloss | | |
|---|---|---|---|
| μm | Polycarbonate | Polyimide | Polyether etherketone |
| 0 | 25 | 25 | 25 |
| 200 | | 55 | 60 |
| 250 | 59 | | |
| 400 | | 59 | 63 |
| 500 | 66 | | |
| 600 | | 74 | 69 |
| 750 | 74 | | |
| 800 | | | 71 |
| 1000 | | | 68 |

When plotted individually, the results for each of the three materials set out in Table 1 follow a similar pattern, and are collectively represented by the average curve shown in the Graph. Graph 1 shows that the increase percentage in gloss corresponding to reduction in the severity of the chill mark is solely related to the thickness of the film and not to its surface characteristics.

Thus for a given charge being moulded at specified charge and mould temperatures and using a specified closure speed, it is possible to determine the barrier film thickness necessary to prevent excessively rapid solidification of the charge during moulding, which generates chill marks.

For the charge specified above, and also using the specified charge and mould temperatures in a press having a first stage closure speed of 98 millimetres per second and a second (compression) stage closure speed of 4 millimetres per second, it was found that chill marks were reduced to an acceptable level if a thermal barrier film of from about 300μ to 500μ was used.

Another assessment of chill mark severity can be made using Talysurf roughness measurements (according to ISO Standards 4287 and 4288).

Table 2 sets out the results from a number of trials carried out to compare the severity of chill marks using different kinds of barrier layer. All trials were carried out using a web comprising 30% glass fibres 11 μ in diameter and 70% polypropylene, prepared according to the method described in European Patent Application No. 85300031.2 (Publication No. 0 148 760). The web was pre-heated to 220 °C and the press to 60 °C, the press having a first stage closure speed of 98 mm/sec and a second (compression) stage closure speed of 4 mm/sec.

TABLE 2

| Trial No. | Thermal Barrier | Tool Temp (°C) | Talysurf Ra (μm) smoothness | | | Observations |
|---|---|---|---|---|---|---|
| | | | Barrier | Moulding | | |
| | | | | Within Charge area | Outside Charge Area | |
| 1 | None | 100 | Tool = 0.1 | 0.9 | 1.1 | Very little primary chill mark |
| | | | | | | Fairly uniform overall appearance |
| 2 | None | 70 | Tool = 0.1 | 4.2/1.3 | 2.0 | Obvious primary chill mark |
| | | | | | | Non-uniform overal appearance |
| 3 | Silicone coated paper insert | 70 | 1.0 | 1.7 | 1.7 | Very little primary chill mark |
| | | | | | | Fairly uniform overall appearance. |
| 4 | 500u Polycarbonate film insert | 70 | 0.1 | 0.6 | 0.4 | No primary chill mark. |
| | | | | | | Uniform overall appearance. |
| 5 | HALAR coated tool | 70 | 0.4 | 0.8 | 0.8 | No primary chill mark. |
| | | | | | | Uniform overall appearance |
| 6 | PEEK coated tool | 70 | 2.0 | 2.3 | 1.8 | Very little primary chill mark. |
| | | | | | | Quite uniform overall appearance. |
| 7 | $Al_2O_3$ coated tool | 70 | 12.8 | 11.9 | 6.9 | Little primary chill mark. |
| | | | | | | Non-uniform overall appearance. |

Trial 1

This shows that the severity of the chill mark can be substantially reduced by running the press at a higher temperature. However, this gives rise to serious disadvantages in terms of energy usage and slow press cycle times.

Trial 2 (Control)

This demonstrates the severity of the chill mark (indicated by the different smoothness measurements within the charge area) which result from using the press at a commercially acceptable operating temperature without a thermal barrier.

6

## Trials 3 and 4

These trials demonstrate the reduction in chill mark severity which results from using thermal barrier inserts comprising respectively silicone coated kraft paper 60 $\mu$m thick and polycarbonate film 500 $\mu$m thick.

## Trials 5 and 6

These trials demonstrate the reduction in chill mark severity which results from using thermal barriers in the form of tool coatings having thermal conductiveness in the range 0.2 - 0.4 Watts per metre degree C (0.1 - 0.3 BTu per ft.hr. °F). The coatings were respectively :-
HALAR (Ethylene - chlorotrifluoro-ethylene) applied at a nominal 450 $\mu$m thick
PEEK (Polyetheretherketone) applied at a nominal 300 $\mu$m thick

## Trial 7

This trial demonstrates the effect of using a thermal barrier, applied as a coating to the tool, which comprises a relatively rough brush applied layer of Aluminium Oxide ($Al_2O_3$) having a thermal conductivity of 1.6 Watts per metre degree C (0.9 BTu/ft.hr. °F), the coating being applied at a nominal thickness of 175 $\mu$m. The coating was sold as coating LA2 by Union Carbide.

Although the surface texture was rougher than in the other trials, due to the "embossing" effect of the tool, the texture was seen to be very even within the charge area.

## Claims

1. A process for moulding articles from a charge of sheet-like material comprising plastics material and reinforcing fibres about 50 millimetres or less in length, heating the sheet-like material to a moulding temperature and subjecting it to a chill moulding process in a press mould and which includes providing a thermal barrier material of lower thermal conductivity than the mould between the surface of the sheet-like material and at least part of the mould to prevent chill marking of the moulded surface, said thermal barrier material being separable from the moulded surface subsequent to moulding.

2. A process as claimed in claim 1 in which said thermal barrier material is provided as a coating on the mould.

3. A process as claimed in claim 2 in which said coating is of enamel, ceramic or a polymeric material.

4. A process as claimed in claim 1 in which said thermal barrier material comprises an insert which is removable from the mould after each pressing operation.

5. A process as claimed in claim 4 in which said insert is adapted to be re-used in one or more subsequent pressing operations.

6. A process as claimed in any one of preceding claims 1 to 5 in which said thermal barrier material has a textured surface which produces an embossing effect on the moulded surface.

7. A process as claimed in any one of preceding claims 1 to 6 in which a thermal barrier material is provided on two or more surfaces of the mould.

8. A process as claimed in any one of the preceding claims in which the charge of sheet-like material is made by the process set forth in European Patent Application No. 85300031.2 (Publication No. 0 148 760), European Patent Application No. 85300033.9 (Publication No. 0 148 762), or European Patent Application No. 87306602.1 (Publication No. 0 255 316).

9. A process as claimed in any one of the preceding claims in which the thermal barrier material has a thermal conductivity of less than about 1.0 watt/Meter degree C.

10. A process as claimed in claim 9 in which the thermal barrier material has a thermal conductivity of less than about 0.5 watt/Meter degree C.

FIG.1

FIG.2

FIG.3

FIG.4

FIG.5

FIG.6

75° GLOSS VALUE OF MOULDING (%)

FILM THICKNESS (μm)

2/2

| | DOCUMENTS CONSIDERED TO BE RELEVANT | | EP 90301648.3 |
|---|---|---|---|

| Category | Citation of document with indication, where appropriate, of relevant passages | Relevant to claim | CLASSIFICATION OF THE APPLICATION (Int Cl⁵) |
|---|---|---|---|
| X | US - A - 4 629 650 (KATAOKA) * Column 2, lines 57-68; column 3, lines 1-5; claim 1; fig. 3A * | 1 | B 29 C 43/02 B 29 C 59/02 B 29 C 67/14 |
| A | | 3 | |
| A | DE - A - 2 112 619 (CHAUSSURES ANDRE) * Claim 15; fig. 9,10 * | 1-3,6 | |
| A | DE - A1 - 3 441 906 (BECK) * Fig. 1 * | 1 | |
| A | US - A - 4 385 955 (DOERFLING) * Totality * | | |

| | TECHNICAL FIELDS SEARCHED (Int Cl⁵) |
|---|---|
| | B 29 C |

The present search report has been drawn up for all claims

| Place of search | Date of completion of the search | Examiner |
|---|---|---|
| VIENNA | 14-05-1990 | REININGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document